# EUROPEAN PATENT SPECIFICATION

(11) **EP 1 629 183 B1**
(45) Date of publication and mention of the grant of the patent: **30.12.2009**
(21) Application number: 04721754.2
(22) Date of filing: 18.03.2004
(51) Int. Cl.: F02B 37/24, B60W 10/06, B60W 10/10, B60W 40/06

(54) **METHOD TO CONTROL THE SUPERCHARGE IN A COMBUSTION ENGINE AND A VEHICLE WITH A SUPERCHARGED COMBUSTION ENGINE WITH ELECTRONIC CONTROL UNITS FOR CONTROLLING THE SUPERCHARGE**
VERFAHREN ZUR STEUERUNG DER AUFLADUNG IN EINEM VERBRENNUNGSMOTOR UND FAHRZEUG MIT EINEM AUFGELADENEN VERBRENNUNGSMOTOR MIT ELEKTRONISCHEN STEUEREINHEITEN ZUR STEUERUNG DER AUFLADUNG
PROCEDE DE REGULATION DE LA SURALIMENTATION DANS UN MOTEUR A COMBUSTION INTERNE ET VEHICULE POSSEDANT UN MOTEUR A COMBUSTION INTERNE A SURALIMENTATION POURVU D'UNITES DE REGULATION ELECTRONIQUES POUR LA REGULATION DE LA SURALIMENTATION

(30) Priority: 24.04.2003 SE 0301198
(43) Date of publication of application: 01.03.2006
(73) Proprietor: VOLVO LASTVAGNAR AB, 405 08 Göteborg (SE)
(72) Inventor: BERGLUND, Sixten, S-423 53 Torslanda (SE); ERIKSSON, Anders, S-413 20 Göteborg (SE); STEEN, Marcus, S-424 33 Angered (SE); UDD, Sören, S-440 45 Nödinge (SE)
(74) Representative: Fröhling, Werner Otto
(86) International application number: PCT/SE2004/000400
(87) International publication number: WO 2004/094176

(56) References cited:
- EP-A1- 0 831 255
- DE-A1- 10 035 027
- DE-A1- 10 146 333
- US-A- 5 911 771
- US-A- 6 151 549

## Description

The present invention relates to a method, in a supercharged combustion engine in a vehicle, during forward travel of the vehicle, of regulating geometric changes in the supercharge system of the engine which promote changes in the boost pressure of the engine.

The invention also relates to a vehicle having a supercharged combustion engine with electronic control members controlling the supply of fuel and air to the combustion chamber of the engine.

In previously known supercharge systems for combustion engines, geometric changes in the systems, which promote changes in the boost pressure of the engine and/or exhaust-gas back pressure, are regulated instantaneously and internally within the engine, i.e. only after a change in the operating condition of the engine has been initiated. This leads to delays in the regulation owing to the time constants for emptying or pressurizing the pipe system of the engine, which can be large in volume. It is generally known, for example, that with present-day regulation it is not possible to avoid a so-called "turbo lag" in a turbocharged engine, i.e. a certain delay from the driver giving gas to the pick-up in torque. When a gearshift is made in an automatic gearbox to an engine having a turbo compressor, in which the boost pressure is regulated by regulating the exhaust-gas flow to the turbine with the aid of a shunt valve, a so-called "waste gate" valve, this valve is opened for a fall-off in torque based on engine-internal control independent of information on transients (for example gearshift) in the drive train. Typically, it is opened when the boost pressure exceeds a predetermined threshold value and is closed when the boost pressure falls below another predetermined threshold value. An early opening has a positive effect upon fuel consumption, whilst an early closing has a positive effect upon the response of the engine. A timely adjustment of the boost pressure in advance of a transient also has a positive effect upon the engine compression braking performed when an upward gearshift is made.

The object of the present invention is to produce a method of controlling geometric changes in the supercharge system of the engine, for example of controlling a waste-gate valve, so that changes in the boost pressure of the engine can be matched in advance to a future course of events, instead of, as in the current situation, only being controlled instantaneously internally within the engine.

This is achieved according to the invention by calculating the future road resistance of the vehicle, by estimating the time period to a future transient in the operating condition of the engine and by making, during this time period, necessary geometric changes in the supercharge system of the engine so as to optimize at least the response of the engine when the transient arises.

When a gearshift is made, a better response than previously can thereby be achieved, for example, by closing the waste-gate valve before the boost pressure has had time to fall (or the gearshift is wholly completed), so that the boost pressure has time to be built up to the necessary level to provide immediate response, upon a subsequent pick-up in torque, as soon as the gearshift operation is concluded.

The invention is based on the fact that electronic control members controlling said geometric changes, for example re-setting of a waste-gate valve, have information on when a future transient, for example gearshift, will take place. This information is founded on information on future changes in the road resistance of the vehicle. The invention is herein based upon the technique described in patent application SE 0103629-2. With inputted parameters and hence knowledge of at least road gradient and vehicle gas pedal position, but also possibly covering engine, turbo and transmission characteristics, the control members are here designed to elect when a future gearshift will be made according to a chosen gearshift strategy. Information on future road resistance can herein be obtained by the use of GPS equipment and electronic maps containing stored data on the topography of the surroundings. For a more detailed description of the technique for identifying the surroundings of the vehicle, reference is therefore made to the abovementioned patent application.

A motor vehicle of the type stated in the introduction is characterized according to the invention in that the control members are designed, during forward travel of the vehicle, on the basis of input information on at least road gradient and gas pedal controls position, to estimate future road resistance and the time period to a future transient in the operating condition of the engine and to control geometric changes in the supercharge system of the engine during said time period so as to optimize the response of the engine when the transient arises.

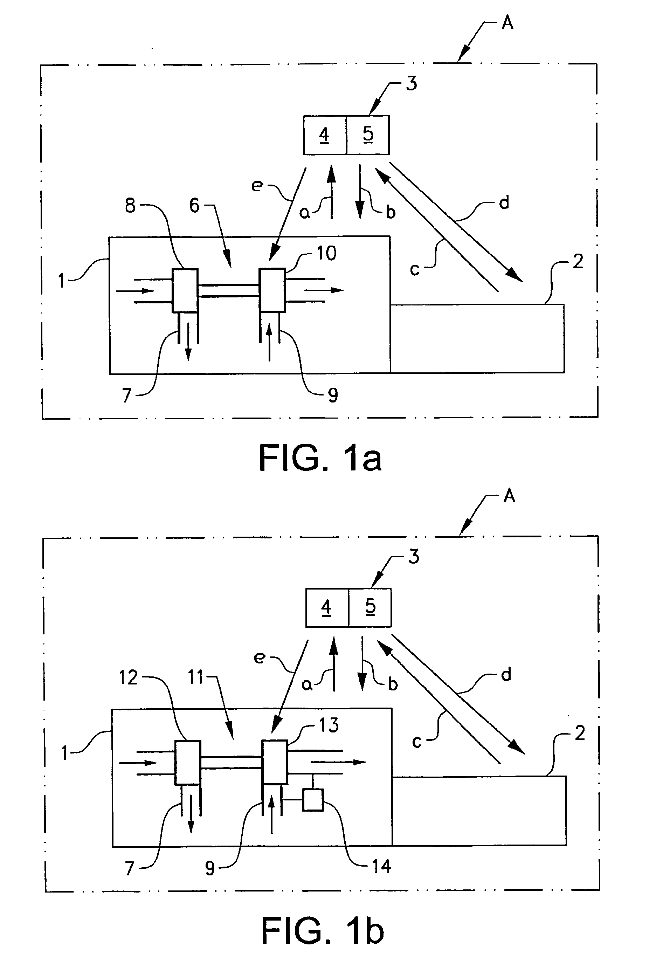

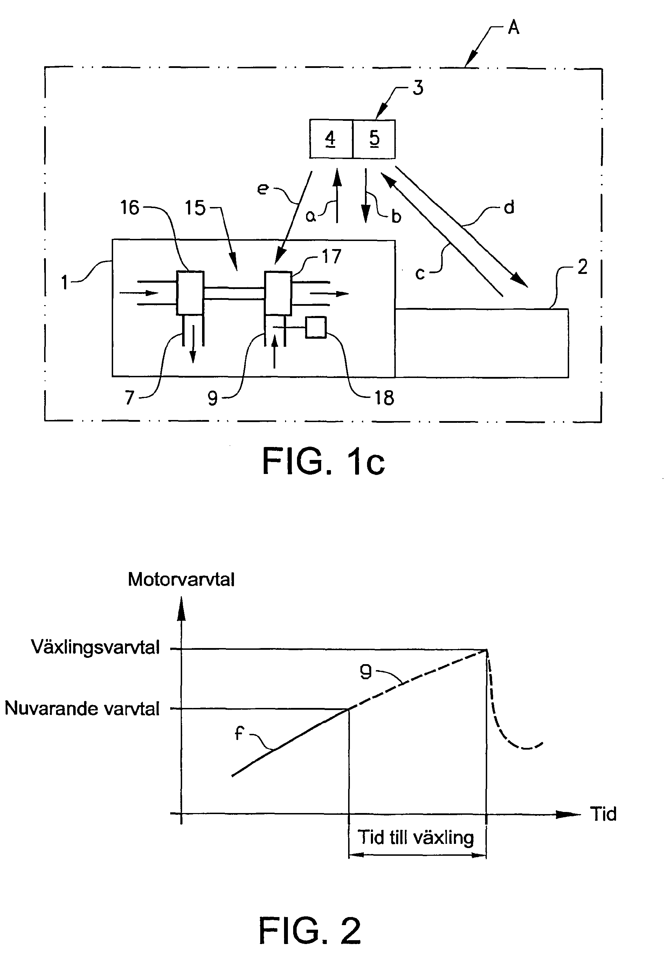

The invention is described in greater detail below with reference to illustrative embodiments shown in the appended drawing, in which fig. 1a shows a diagrammatic representation of a combustion engine and transmission with a first embodiment of a turbo compressor, fig. 1b a second and fig. 1c a third embodiment of a turbo compressor for the engine in fig. 1a, and fig. 2 a chart representing a simulation of the forward travel of the vehicle.

In fig. 1a, 1 denotes a combustion engine in a motor vehicle A, to which a transmission 2 is drive-coupled. The engine 1 and the transmission 2 are controlled by an electronic control unit 3 comprising an engine control part 4 and a transmission control part 5, which communicate with each other. The control can be realized according to the model described in the abovementioned SE 0103629-2 and symbolized respectively by the arrows "a" and "b" for the engine control and by "c" and "d" for the transmission control.

In fig. 1a, a turbocharger is denoted in general terms by 6, which turbocharger comprises a compressor 8 communicating with the induction line 7 of the engine and a turbine 10 communicating with the exhaust-gas line 9 of the engine, which turbine can be a turbine with variable blade geometry, a so-called VGN (Variable Geometry Turbine), by means of which the boost pressure delivered by the compressor 8 is regulated. The control unit 3 controls the geometry of guide rails in the turbine, symbolized by the arrow "e". As an alternative to the turbocharger 6, a turbocharger 11, shown in fig. 1b, can be used. The turbocharger 11 consists of a compressor 12 and a turbine 13, which communicate respectively with the induction line 7 and exhaust-gas line 9 of the engine. The boost pressure is here regulated with the aid of a shunt valve 14, a so-called waste-gate valve, which leads the exhaust gases past the turbine when the boost pressure has reached a predetermined level. The waste-gate valve 14 is controlled by the control unit 3. As a further alternative to the turbocharger 6 or 11, a turbocharger 15, shown in fig. 1c, can be used. It consists of a compressor 16 and a so-called VNT (Variable Nozzle Turbine), which is a turbine 17 with variable throttle valve 18 on the inlet side of the turbine. The valve 18 is controlled by the control unit 3 for regulating the boost pressure of the compressor 16.

In the control unit 3, the forward travel of the vehicle is stored in the form of the increase in engine speed as a function of time, which in fig. 2 is marked by the continuous curve "f". With information on gas pedal position and information from, for example, GPS equipment with electronic maps containing inlaid topography, future road resistance and the time period from a particular rev speed to a rev speed at which the next gearshift in the transmission is estimated to occur, which in fig. 2 is marked by a dashed extension "g" of the curve "f", can be simulated. For a more detailed description of how the forward travel of the vehicle can be simulated in model-based fashion, reference should be made to the abovementioned SE 0103629-2.

Within the time period marked in fig. 2, the control unit 3 regulates the boost pressure, so that necessary pressure change is effected when the gearshift is initiated. Prior to the conclusion of the gearshift operation, the control unit makes necessary preparations for a subsequent pick-up in torque, so that optimal response is obtained in connection with the pick-up. By optimal response is meant, here and in subsequent patent claims, that a change in engine torque requested by the driver of the vehicle - a fall-off in torque and a pick-up in torque - occurs with the least possible delay, i.e. response means, in simple terms, rapid torque build-up in both the positive (driving) and negative (braking) direction. "Economy situation" in subsequent patent claims means that the fuel economy is the most dominant control unit, i.e. the driver is prepared to forego other characteristics for the benefit of economy, whilst "performance situation" means that drive power performance is the most dominant control parameter, i.e. the driver is ready to forego other characteristics in order to deliver power and torque to the vehicle.

If the engine is provided with a compression brake device, for example of the type shown and described in EP 0 458 857 B1, to which reference is made for a more detailed description of the design and functioning of a type of compression brake, the boost pressure is controlled during said time period, as an upward gearshift is made in the gearbox, in order to optimize the engine braking torque.

## Claims

1. A method, in a supercharged combustion engine in a vehicle, during forward travel of the vehicle, of regulating geometric changes in the supercharge system of the engine which promote changes in the boost pressure of the engine, **characterized in that** the future road resistance of the vehicle is calculated, **in that** the time period to a future transient in the operating condition of the engine (1) is estimated and **in that** necessary geometric changes in the supercharge system (6; 11; 15) of the engine are made during this time period so as to optimize the response of the engine when the transient arises.

2. The method as claimed in claim 1, **characterized in that** in case of a future transient implying a fall-off in torque, geometric changes are made which result in a lowering of the boost pressure during said time period, and **in that**, conversely, in case of a future transient implying a pick-up in torque, geometric changes are made which result in a raising of the boost pressure during said time period.

3. The method as claimed in claim 2 for regulating the boost pressure in connection with gearshift in an automatic transmission (2) coupled to the engine (1), **characterized in that**, in connection with gearshift in an economy situation, geometric changes are made which result in a lowering of the boost pressure prior to the initiation of the gearshift operation.

4. The method as claimed in claim 2 for regulating the boost pressure in connection with gearshift in an automatic transmission (2) coupled to the engine (1), **characterized in that**, in connection with gearshift in a performance situation, geometric changes are made which result in a raising of the boost pressure prior to the conclusion of the gearshift operation.

5. The method as claimed in claim 4 for regulating the boost pressure in connection with engine braking in a vehicle having an engine with compression brake, **characterized in that**, when the engine is braked in connection with upward gearshift in a performance situation, geometric changes are made during said time period, prior to the initiation of the gearshift operation, so as to optimize the engine braking torque during the upward gearshift.

6. The method as claimed in claim 3 for regulating the boost pressure in connection with engine braking in a vehicle having an engine with compression brake, **characterized in that**, when the engine is braked in connection with upward gearshift in an economy situation, geometric changes are made during said time period, prior to the initiation of the gearshift operation, so as to optimize the engine braking torque during the upward gearshift.

7. A vehicle having a supercharged combustion engine (1) with electronic control members (3) controlling the supply of fuel and air to the combustion chamber of the engine, **characterized in that** the control members (3) are designed, during forward travel of the vehicle, on the basis of input information on at least road gradient and gas pedal position, to estimate future road resistance and the time period to a future transient in the operating condition of the engine and to control geometric changes in the supercharge system (6; 11; 15) of the engine during said time period so as to optimize the response of the engine when the transient arises.

8. The vehicle as claimed in claim 7, **characterized in that** the supercharge system comprises a turbocharger (11) having a shunt valve (14) for regulating the quantity of exhaust gas supplied to the turbine (13) of the compressor and **in that** the control members (3) are designed to control said shunt valve.

9. The vehicle as claimed in claim 7, **characterized in that** the supercharge system comprises a turbocharger (6) having a turbine with variable geometry and **in that** the control members (3) are designed to control the turbine geometry.

10. The vehicle as claimed in claim 7, **characterized in that** the supercharge system comprises a turbocharger (15) having a turbine (17) with a variable throttle valve (18) on the inlet side of the turbine and **in that** the control members (3) are designed to control the throttle valve.

11. The vehicle as claimed in any of claims 7-10, having an automatic transmission (2) coupled to the engine (1), **characterized in that** the control members (3) have an engine and transmission control function and are designed to estimate the time period to a future gearshift and control said geometric changes in the supercharge system (6; 11; 15) so that the boost pressure is actively changed prior to the initiation of the gearshift.

## Patentansprüche

1. Verfahren zur Regelung geometrischer Änderungen im Aufladesystem eines Motors, welche Änderungen im Ladedruck des Motors fördern, in einem aufgeladenen Verbrennungsmotor in einem Fahrzeug während der Vorwärtsfahrt des Fahrzeugs, **dadurch gekennzeichnet, dass** der zukünftige Straßenwiderstand des Fahrzeugs berechnet wird, dass die Zeitspanne bis zu einem zukünftigen Übergang im Betriebszustand des Motors (1) geschätzt wird und dass die notwendigen geometrischen Änderungen im Aufladesystem (6; 11;15) des Motors während dieser Zeitspanne durchgeführt werden, um das Ansprechen des Motors zu optimieren, wenn der Übergang auftritt.

2. Verfahren nach Anspruch 1, **dadurch gekennzeichnet, dass** im Falle eines zukünftigen Übergangs, welcher einen Drehmomentabfall impliziert, geometrische Änderungen durchgeführt werden, die zu einem Absenken des Ladedrucks während der genannten Zeitspanne führen, und dass umgekehrt im Falle eines zukünftigen Übergangs, welcher eine Drehmomentzunahme impliziert, geometrische Änderungen durchgeführt werden, die zu einem Anheben des Ladedrucks während der genannten Zeitspanne führen.

3. Verfahren nach Anspruch 2 zur Regelung des Ladedrucks in Verbindung mit dem Gangschalten in einem mit dem Motor (1) gekoppelten Automatikgetriebe (2), **dadurch gekennzeichnet, dass** in Verbindung mit dem Gangschalten in einer Sparsamkeitssituation geometrische Änderungen durchgeführt werden, die zu einem Absenken des Ladedrucks vor dem Beginn des Gangschaltvorgangs führen.

4. Verfahren nach Anspruch 2 zur Regelung des Ladedrucks in Verbindung mit dem Gangschalten in einem mit dem Motor (1) gekoppelten Automatikgetriebe (2), **dadurch gekennzeichnet, dass** in Verbindung mit dem Gangschalten in einer Leistungssituation geometrische Änderungen durchgeführt werden, die zu einem Anheben des Ladedrucks vor dem Abschluss des Gangschaltvorgangs führen.

5. Verfahren nach Anspruch 4 zur Regelung des Ladedrucks in Verbindung mit der Motorbremsung in einem Fahrzeug, das einen Motor mit Kompressionsbremse aufweist, **dadurch gekennzeichnet, dass**, wenn der Motor in Verbindung mit einem Gangschalten nach oben in einer Leistungssituation gebremst wird, während der genannten Zeitspanne vor dem Beginn des Gangschaltvorgangs geometrische Änderungen durchgeführt werden, um das Motorbremsdrehmoment während des Gangschaltens nach oben zu optimieren.

6. Verfahren nach Anspruch 3 zur Regelung des Ladedrucks in Verbindung mit der Motorbremsung in einem Fahrzeug, das einen Motor mit Kompressionsbremse aufweist, **dadurch gekennzeichnet, dass**, wenn der Motor in Verbindung mit einem Gangschalten nach oben in einer Sparsamkeitssituation gebremst wird, während der genannten Zeitspanne vor dem Beginn des Gangschaltvorgangs geometrische Änderungen durchgeführt werden, um das Motorbremsdrehmoment während des Gangschaltens nach oben zu optimieren.

7. Fahrzeug, das einen aufgeladenen Verbrennungsmotor (1) mit elektronischen Steuerelementen (3) aufweist, welche die Zuführung von Kraftstoff und Luft zur Verbrennungskammer der Motors steuern, **dadurch gekennzeichnet, dass** die Steuerelemente (3) dazu ausgelegt sind, während der Vorwärtsfahrt des Fahrzeugs auf der Basis von Eingangsinformationen über zumindest die Straßensteigung und die Gaspedalposition den zukünftigen Straßenwiderstand und die Zeitspanne bis zu einem zukünftigen Übergang im Betriebszustand des Motors zu schätzen und geometrische Änderungen in dem Aufladesystem (6; 11, 15) des Motors während der genannten Zeitspanne zu steuern, um das Ansprechen des Motors zu optimieren, wenn der Übergang auftritt.

8. Fahrzeug nach Anspruch 7, **dadurch gekennzeichnet, dass** das Aufladesystem einen Turbolader (11) umfasst, der ein Nebenschlussventil (14) zur Regulierung der Menge an der Turbine (13) des Kompressors zugeführtem Abgas aufweist, und dass die Steuerelemente (3) dazu ausgelegt sind, das Nebenschlussventil zu steuern.

9. Fahrzeug nach Anspruch 7, **dadurch gekennzeichnet, dass** das Aufladesystem einen Turbolader (6) umfasst, der eine Turbine mit variabler Geometrie aufweist, und dass die Steuerelemente (3) dazu ausgelegt sind, die Turbinengeometrie zu steuern.

10. Fahrzeug nach Anspruch 7, **dadurch gekennzeichnet, dass** das Aufladesystem einen Turbolader (15) umfasst, der eine Turbine (17) mit einem variablen Drosselventil (18) an der Einlassseite der Turbine aufweist, und dass die Steuerelemente (13) dazu ausgelegt sind, das Drosselventil zu steuern.

11. Fahrzeug nach irgendeinem der Ansprüche 7 - 10, das ein mit dem Motor (1) gekoppeltes Automatikgetriebe (2) aufweist, **dadurch gekennzeichnet, dass** die Steuerelemente (3) eine Motor- und Getriebesteuerungsfunktion haben und dazu ausgelegt sind, die Zeitspanne bis zu einem zukünftigen Gangschalten zu schätzen und die geometrischen Änderungen in dem Aufladesystem (6; 11; 15) so zu steuern, dass der Ladedruck vor dem Beginn des Gangschaltens aktiv geändert wird.

## Revendications

1. Procédé, dans un moteur à combustion à suralimentation d'un véhicule, lors d'un déplacement en marche avant du véhicule, consistant à réguler des modifications géométriques dans le système de suralimentation du moteur, qui favorisent des changements de pression d'admission du moteur, **caractérisé en ce que** la future résistance au roulement du véhicule est calculée, **en ce que** la période de temps jusqu'à une transition future de l'état de fonctionnement du moteur (1) est estimée, et **en ce que** des modifications géométriques nécessaires dans le système de suralimentation (6 ; 11 ; 15) du moteur interviennent pendant cette période de temps afin d'optimiser la réponse du moteur lorsque la transition se produit.

2. Procédé selon la revendication 1, **caractérisé en ce que**, dans le cas d'une transition future impliquant une diminution du couple, des modifications géométriques interviennent qui ont pour résultat une diminution de la pression d'admission pendant ladite période de temps, et **en ce que**, réciproquement, dans le cas d'une transition future impliquant un accroissement du couple, des modifications géométriques interviennent qui ont pour résultat une augmentation de la pression d'admission pendant ladite période de temps.

3. Procédé selon la revendication 2, destiné à réguler la pression d'admission en liaison avec un changement de vitesse dans une transmission automatique (2) couplée au moteur (1), **caractérisé en ce que**, en liaison avec un changement de vitesse dans une situation de régime économique, des modifications géométriques interviennent, qui ont pour résultat une diminution de la pression d'admission avant le début de l'opération de changement de vitesse.

4. Procédé selon la revendication 2, destiné à réguler la pression d'admission en liaison avec un changement de vitesse dans une transmission automatique (2) couplée au moteur (1), **caractérisé en ce que**, en liaison avec un changement de vitesse dans une situation de régime performant, des modifications géométriques interviennent, ayant pour résultat une augmentation de la pression d'admission avant l'achèvement de l'opération de changement de vitesse.

5. Procédé selon la revendication 4, destiné à réguler la pression d'admission en liaison avec le frein moteur d'un véhicule ayant un moteur équipé d'un frein sur échappement, **caractérisé en ce que**, lorsque le moteur est freiné en liaison avec le passage à une vitesse supérieure, en situation de régime performant, des modifications géométriques interviennent pendant ladite période de temps, avant le début de l'opération de changement de vitesse, afin d'optimiser le couple de frein moteur pendant le passage à une vitesse supérieure.

6. Procédé selon la revendication 3, destiné à réguler la pression d'admission en liaison avec le frein moteur d'un véhicule ayant un moteur équipé d'un frein sur échappement, **caractérisé en ce que**, lorsque le moteur est freiné en liaison avec le passage à une vitesse supérieure, en situation de régime économique, des modifications géométriques interviennent pendant ladite période de temps, avant le début de l'opération de changement de vitesse, afin d'optimiser le couple de frein moteur pendant le passage à une vitesse supérieure.

7. Véhicule qui possède un moteur à combustion interne suralimenté (1) ayant des éléments de régulation électronique (3) régulant l'alimentation en carburant et en air de la chambre de combustion du moteur, **caractérisé en ce que** les éléments de régulation (3) sont conçus, lors d'un déplacement en marche avant du véhicule, sur la base d'informations d'entrée relatives au moins à la pente de la route et à la position de la pédale d'accélération, pour estimer la future résistance au roulement et la période de temps devant s'écouler jusqu'à une transition future de l'état de fonctionnement du moteur et pour réguler des modifications géométriques dans le système de suralimentation (6 ; 11 ; 15) du moteur pendant ladite période de temps, afin d'optimiser la réponse du moteur lorsque la transition se produit.

8. Véhicule selon la revendication 7, **caractérisé en ce que** le système de suralimentation comprend un turbocompresseur (11), ayant une vanne de dérivation (14) afin de réguler la quantité de gaz d'échappement fournie à la turbine (13) du compresseur, et **en ce que** les éléments de régulation (3) sont conçus de manière à réguler ladite vanne de dérivation.

9. Véhicule selon la revendication 7, **caractérisé en ce que** le système de suralimentation comprend un turbocompresseur (6), ayant une turbine à géométrie variable, et **en ce que** les éléments de régulation (3) sont conçus de manière à réguler la géométrie de la turbine.

10. Véhicule selon la revendication 7, **caractérisé en ce que** le système de suralimentation comprend un turbocompresseur (15), ayant une turbine (17) équipée d'une vanne à papillon variable (18) du côté entrée de la turbine, et **en ce que** les éléments de régulation (3) sont conçus de manière à réguler la vanne à papillon.

11. Véhicule selon l'une quelconque des revendications 7 à 10, équipé d'une transmission automatique (2) couplée au moteur (1), **caractérisé en ce que** les éléments de régulation (3) ont une fonction de régulation du moteur et de la transmission, et sont conçus de manière à estimer la période de temps jusqu'à un futur changement de vitesse et à réguler lesdites modifications géométriques du système de suralimentation (6 ; 11 ; 15), de telle sorte que la pression d'admission est modifiée de manière active avant le début du changement de vitesse.
